# EUROPEAN PATENT SPECIFICATION

(11) **EP 1 831 596 B1**
(45) Date of publication and mention of the grant of the patent: **24.04.2013**
(21) Application number: 05843719.5
(22) Date of filing: 22.12.2005
(51) Int. Cl.: F16L 11/26, F16L 55/033, F24F 13/02, F16L 11/02, F16L 11/20, F24F 13/06

(54) **IMPROVEMENTS IN OR RELATING TO TEXTILE DUCTS**
VERBESSERUNGEN VON TEXTILEN LEITUNGEN
AMELIORATIONS POUR CONDUITS TEXTILES

(30) Priority: 29.12.2004 GB 0428454; 29.12.2004 US 23510
(43) Date of publication of application: 12.09.2007
(73) Proprietor: Atmosphere Control International Limited, Portsmouth Hampshire PO3 5FP (GB); Thomsen, Niels Erik, DK-6600 Vejen (DK)
(72) Inventor: CASSIDY, Stephen Wellman Defence Limited, Portsmouth, Hampshire PO3 5PG (GB); HUNT, Brian Wellman Defence Limited, Portsmouth, Hampshire PO3 5PG (GB)
(74) Representative: Setna, Rohan P.
(86) International application number: PCT/GB2005/005042
(87) International publication number: WO 2006/070182

(56) References cited:
- EP-A- 0 856 709
- WO-A-00/31455
- FR-A- 2 713 317
- US-A1- 2001 017 164
- US-A1- 2004 029 522

## Description

This invention relates to textile ducts for air circulation systems, including air conditioning systems.

Textile ducting (a system of ducts) has been used successfully for air-distribution systems in the commercial field for a number of years, but has only recently started to be used in the marine defence field. As such, since 1999, an increasing number of warships have been fitted with textile ducting as part of their air-distribution systems (air circulation systems).

Typically, the ducts are made of a gas-permeable material, in which case air passes through the weave of the material, or a material which is made to be gas-permeable by the introduction of slots or holes therein, for the passage of air.

As these materials are gas-permeable, they are only used at the point of dispensation and, therefore, air travelling from an air treatment unit and/or an air handling unit to a point of dispensation, travels through conventional aluminium ducting.

The use of textile ducting in this manner has shown a number of advantages. For example, noise is reduced at the point of dispensation by up to 9 decibels. Further, there is a noticeable reduction of draughts as well as more even air-distribution. By far the biggest advantage is the saving of weight, as textile ducts only weigh 20% of the weight of corresponding aluminium ducts, including the suspension system of the duct. As the air treatment units and/or air handling units are often located in compartments or rooms onboard ships or in buildings which are usually several compartments/rooms, or even several decks or floors from the point of dispensation compartment/room, it can be seen that, by replacing the aluminium ducts with a lighter-weight alternative, the weight savings could be very substantial. Of course, if conventional gas-permeable textile ducts were utilised instead of aluminium ducts, the ducting would lose a substantial amount of the air before the treated air reached the point of dispensation. It is possible to use ducting made of gas-impervious materials; however, such ducts have their own disadvantages. For example, often the ducting contains treated air at between 9°C and 13°C and the ducting is surrounded by air in a compartment/room, which can be at a temperature as high as 40°C and 90% relative humidity. Typically, such gas-impervious ducting suffers from condensation forming on the outside of the ducting as the surfaces of the ducts cool to the temperature of the treated air. The air around the surfaces of the ducts, or in contact with the ducts, cools and drops below its dew point, which causes condensation to form on the outer surfaces of the ducts. Further, as it is likely that ducting is run through all areas of the ship, there would be an unacceptable risk of water dropping into critical electronic equipment. It is also particularly desirable to keep humidity to a minimum within the ship for the same reason. Thus, such gas-impervious ducting has not received wide-spread use.

US 2,804,095 discloses a flexible air duct having two tabular shell elements. An air space is provided between the two shell elements which affects insulation of the inner shell. Each section of air duct is provided with a series of holes at each end of the inner shell of the duct section. The inner shell is formed of a synthetic material, e.g. a synthetic plastic tube and the outer shell may be aluminium or synthetic plastic material. This document does not disclose the characterising feature of the present invention.

There is, therefore, a need for light-weight ducting which can transfer air from air treatment or handling units to points of dispensation or distribution systems, without the loss of air through the ducts and/or condensation forming on the outer surfaces of the ducts.

The present invention aims to address at least some of the problems associated with the prior art.

A textile duct (6) suitable for use in an air circulation system to transport a fluid whilst preventing condensation forming thereon, the duct (6) comprising an inner gas-permeable layer (2) and an outer gas-impervious layer (3) formed from a material comprising a textile material, and spacing means (4) located between the inner and outer layers (2; 3) so as to provide one or more spaces (5; 5') between the gas-permeable and gas-impervious layers (2; 3) which spaces (5; 5') is/are capable of transporting a fluid in use, characterised in that the inner gas-permeable layer (2) is provided with a porous weave which allows a fluid to pass through the inner gas-permeable layer (2).

Preferably, the duct further comprises spacing means, such as strips, tabs, meshes, webs, fibrous material and/or foams, located between the inner and outer layers. The spacing means may be provided in sealing contact with one or more respective surfaces of the inner layer and/or the outer layer.

Preferably, the inner layer and/or the outer layer is/are formed from a woven material.

The inner layer may be formed from a substantially gas-impervious material comprising one or more apertures.

Preferably, the outer layer is formed from a material comprising an aramid and/or a polyester, such as Traverna^{™}, which is, most preferably, provided with a substantially non-porous weave.

Advantageously, the aramid is Nomex^{™}.

The inner layer may be formed from a material comprising an aramid and/or a polyester, such as Traverna^{™},
which is, preferably, provided with a porous weave. Also advantageously, the aramid is Nomex^{™}.

It is envisaged that the inner and outer layers and the spacing means may be formed from other materials not specifically mentioned herein, but which materials are equally suitable. However, in the marine defence field, it is of particular importance to provide ducts which are fire-resistant and, therefore, only fire-resistant materials are suitable.

The duct may further comprise a fire-retardant. The fire retardant may be associated with the material forming the inner layer and/or the outer layer, and/or the one or more spacing means between the inner layer and outer layers.

Advantageously, the depth of spacing between separate layers of the duct is provided by a predetermined relationship. The relationship depends upon at least one or more of the following factors: the proposed temperature differential between treated air and air surrounding the duct; the gas-permeable material; the permeability and/or density of the material; and the proposed flow rate of treated air within the duct. Typically, the depth of spacing between layers of the duct is from around 25mm to 50mm. Advantageously, the depth of spacing between the ducts is around 1mm to 3mm per degree of temperature differential, and most preferably 2mm per degree of temperature differential. Preferably, the ducts of the present invention can have a substantially circular, D-shaped or quadrant cross-section, and may further comprise fastening means, most preferably, in the form of one or more zips.

The ducts may be provided with one or more additional gas-permeable layers interposed between the inner and outer layers.

In a second aspect of the present invention, there is provided an air circulation system comprising one or more ducts of the present invention, as defined herein.

In particular, the air circulation system is provided with one or more air treatment units and/or air handling units, wherein said one or more ducts provide(s) passages by which treated air can pass from the treatment and/or handling unit(s) to a point of dispensation. Preferably, the point of dispensation is provided with one or more air dispensation devices, wherein the one or more ducts provide(s) treated air to the one or more dispensation devices.

In use, the temperature of the treated air is below the temperature of air surrounding said one or more ducts. Preferably, the temperature of the treated air is from 5°C to 18°C and, most preferably, from 9°C to 13°C. Advantageously, the air is treated by the air treatment and/or handling units to remove dust, particulates, moisture, and/or nuclear and/or chemical and/or biological agents.

In preferred alternatives, the air circulation system of the present invention may be provided: on a marine vessel, such as, a submarine or a ship; in a building; or in a vehicle, such as, a car.

The ducts of the present invention are formed from laminates. A textile laminate (1) suitable for forming a textile duct (6) comprises an inner gas-permeable layer (2) and an outer gas-impervious layer (3) formed from a material comprising a textile material, and spacing means (4) located between the inner and outer layers (2;3) so as to provide one or more spaces (5;5') between the gas-permeable and the gas-impervious layer (2;3) which spaces (5;5') is/are capable of transporting a fluid in use, the inner gas-permeable layer (2) is provided with a porous weave which allows a fluid to pass through the inner gas-permeable layer wherein the laminate (1) is formable in to a duct of the present invention for transporting a fluid, whilst preventing condensation forming thereon.

Preferably, the laminate is provided with spacing means, such as strips, tabs, meshes, webs, fibrous material and/or foams, located between the inner and outer layers. The sealing means may be provided in sealing contact with one or more respective surfaces of the inner layer and/or the outer layer.

Preferably, the inner layer and/or the outer layer is/are formed from a woven material. Advantageously, the material of the inner layer and the outer layer is an aramid and/or polyester, such as Traverna™. Most preferably, the aramid is Nomex™.

As used herein, gas-permeable means a material that allows gas to pass through it. The manner in which the gas passes through the material may be by nature of the material itself, for example if the material is porous. This may be achieved using a woven material. Alternatively, the material may be substantially non-porous but provided with a plurality of apertures (e.g. holes or slots) through which gas can pass. Apertures may also be provided in gas-permeable materials which are naturally gas-permeable to make the material more permeable.

An air treatment unit, as used herein, may include one or more, and preferably all, of the following: a fan, a cooling coil, a heater, a moisture eliminator, and/or nuclear and/or biological and/or chemical agent filters. An air handling unit, as used herein, may include one or more, and preferably all, of the following: a fan, a cooling coil, a heater and/or a moisture eliminator. Typically, an air circulation system (air-distribution system) comprises one or more ducts, and/or one or more air treatment and/or handling units.

In order that the application may be more easily understood, embodiments of the invention are now disclosed, by way of example, in the accompanying drawings, in which:
Figure 1 is a cross-sectional view of a laminate of the present invention;
Figure 2 is a cross-sectional view of the laminate of Figure 1, in the form of a duct, the cross-section being shown along the length of the duct;
Figure 3 shows a cross-sectional view of an end segment of duct of Figure 2;
Figure 4 shows a cross-sectional view of a centre segment of duct of Figure 2;
Figure 5 is a cross-sectional view of an end of the duct of
Figure 2;

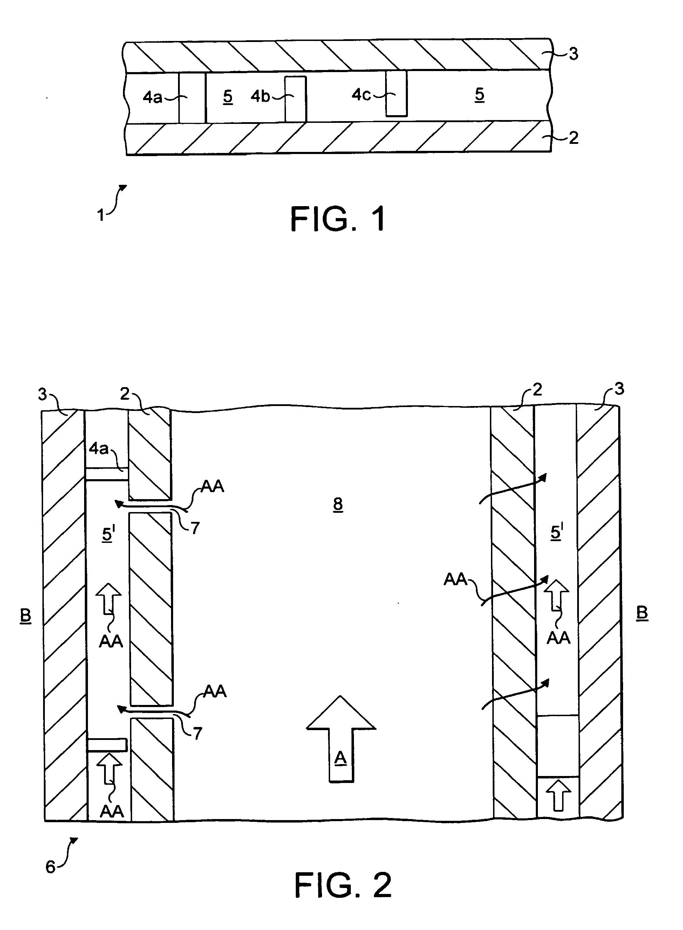

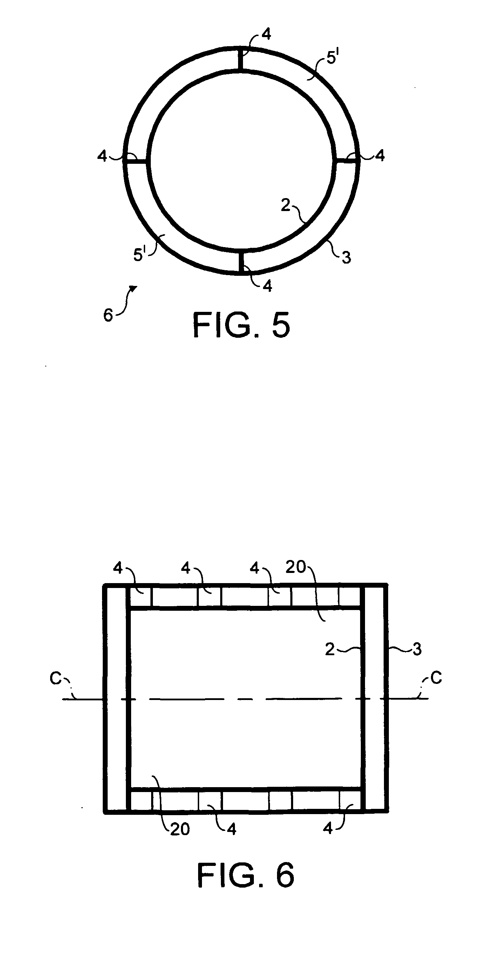

Figure 6 shows a truncated longitudinal cross-section of a duct of Figure 2;

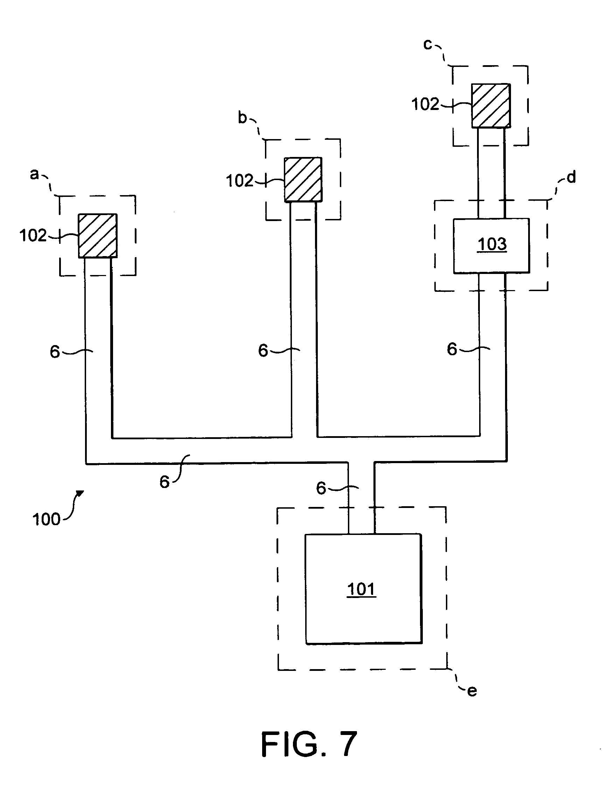

Figure 7 shows a simplified air circulation system of the present invention;

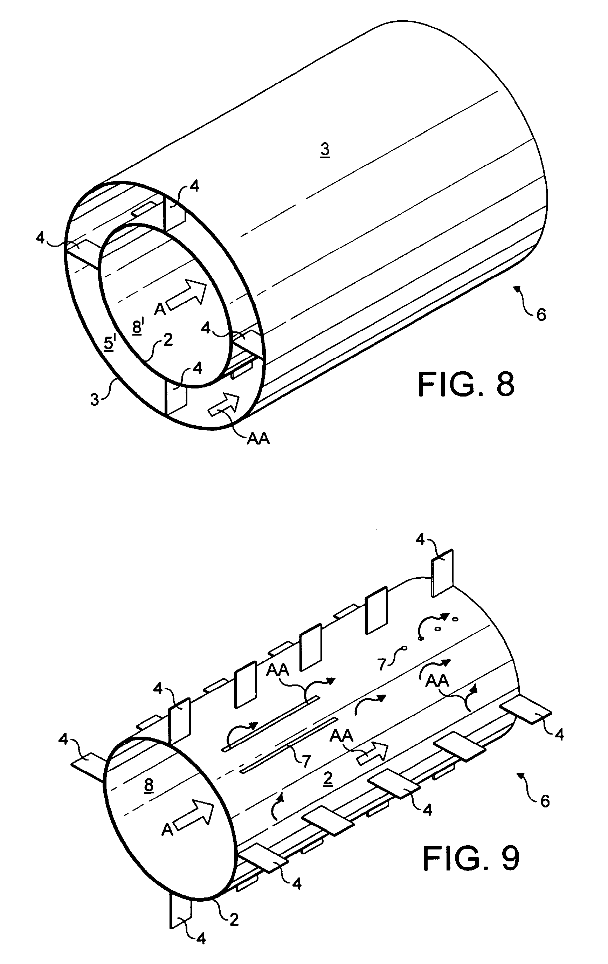

Figure 8 is an isometric view of a transfer duct of Figure 2; and
Figure 9 is an isometric view of a transfer duct of Figure 2 with the outer gas-impervious layer removed.

Figure 1 shows a laminate, generally indicated at 1, having a gas-permeable layer 2, a gas-impervious layer 3 and one or more support strips 4a,4b,4c (spacing means).

Referring to all of the Figures, the gas-permeable layer 2 is made from a material comprising one or more aramids, such as, Nomex ™, and is capable of allowing gas to pass through the material. The material is gas-permeable because it is provided with a loose, porous weave, i.e. gas can easily pass through the weave, or the material is provided with holes or slots 7, to allow gas to pass through the holes or slots, in an otherwise gas-impervious material.

The gas-impervious layer 3 is also made from a material comprising one or more aramids, such as Nomex ™. This material substantially prevents any gas from passing through it, as it is provided with a tight, non-porous weave.

When the gas-permeable layer 2 and the gas-impervious layer 3 are brought into association to form the laminate, one or more spaces 5 therebetween are provided.

The one or more support strips 4a,4b,4c, are designed to aid separation of the gas-permeable and gas-impervious layers 2,3, so as to provide spaces 5 therebetween, preferably, of predetermined height. The support strips 4a,4b,4c can be provided in sealing contact with both the gas-permeable and gas-impervious layers 2,3, as shown by reference 4a, or in sealing contact with only one layer, either the gas-permeable layer 2 or the gas-impervious layer 3, as shown by references 4b and 4c, respectively. Preferably, the support strips are made from a material comprising an aramid, such as Nomex™ or a polyester such as Travera™.

As shown in Figure 2 in particular, the laminate 1, typically in the form of a sheet of laminate 1, can be formed into a duct 6 by sealing together a longitudinal edge of the laminate 1, most preferably, by sewing together the longitudinal edges. The duct is suitable for carrying a gas and, the gas-permeable layer 2 is provided as the innermost layer, and the gas-impervious layer 3, the outermost layer. Thus, a central space 8 is bounded by the gas-permeable layer 2 - through which space 8 a bulk portion of gas can pass - and a further space 5' is bounded by the gas-impervious layer 3 and the gas-permeable layer 2 - through which a smaller portion of gas can pass.

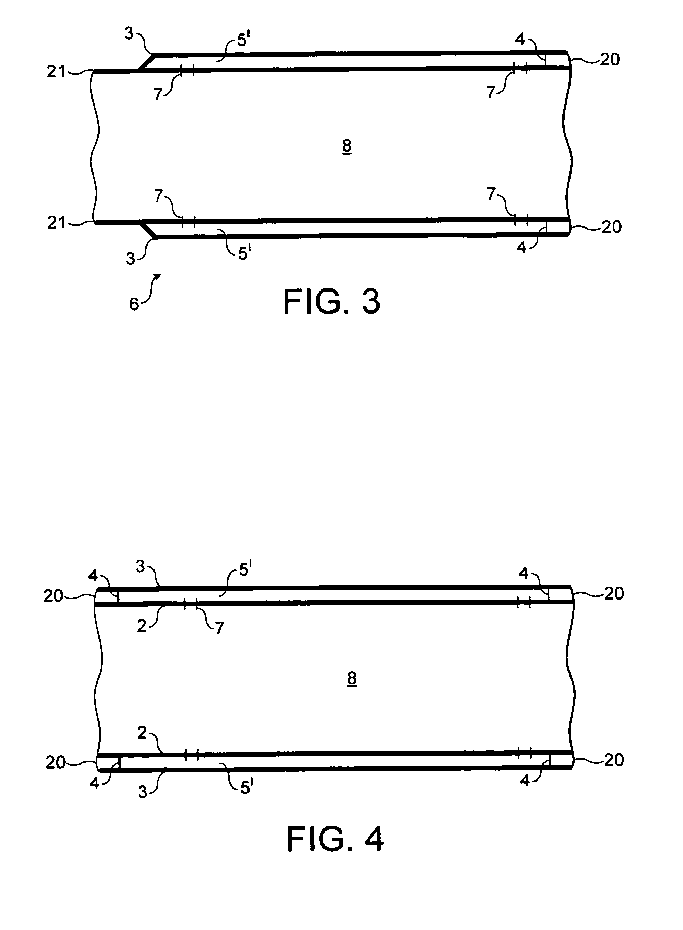

Segments of duct 6 can be connected together. Figure 3 shows and an end segment of duct 6 having an end 20, connectable to further ducts, and an end 21, connectable to air treatment and/or handling units. The ducts can be connected by a push-fit arrangement or any kind of fastening which provides a substantially gas-tight seal between the ducts, and/or air treatment and/or handling units. In a preferred example, segments of duct 6 are connected by zips. Figure 4 shows a centre segment of duct 6 which is provided with two ends 20 connectable to further ducts 6. Advantageously, end segments of duct 6 are fixed to aluminium end pieces (not shown) which are in turn connected to the air treatment and/or handling units.

The ducts 6 of the present invention are easily installed and can be easily disassembled for cleaning, unlike prior art aluminium ducts. In particular, the ducts 6 can be washed in a washing machine, or similar, so as to free entrapped particles and dust, etc. from the weave of the material

Figure 5 shows an end-view of duct 6 of the present invention. The duct 6 is provided with four support strips 4, which aid separation of the gas-permeable and gas-impervious layers 2,3. Although four support strips 4 are shown, it is believed that, potentially, any number will do. However, two support strips are also preferred.

In Figure 6, a longitudinal cross-section of duct is shown represented by the two ends of the duct 6 cut off from a central portion of duct along the Line C. At each end 20 of the duct are positioned four support strips 4. Figure 9 shows an embodiment of an arrangement of support strips 4. As mentioned herein, spacing means can be arranged in any manner between the inner gas-permeable layer 2 and the outer gas-impervious layer 3, as long as the passage of gas AA through the space 5' is unhindered. It is further worth noting that the arrangement of spacing means 4 should not hinder the passage of gas AA through the inner gas-permeable layer 2. In this embodiment, four support strips 4 are provided equally spaced around the circular cross-section of the duct 6. Further, numerous support strips 4 are located in lines along the length of the duct 6. The support strips 4 are also arranged so that the smallest cross-sectional area of strip faces the flow of gas AA through the space 5', so that the flow of gas AA is substantially unhindered.

In use, and as shown in Figures 2, 8 and 9, treated air, indicated by Arrow A, from an air treatment and/or handling unit is passed through the duct 6 in the direction of the arrow. The bulk portion of air A passes through the central space 8 of the duct 6 and on to further ducts, etc. A smaller portion of the air A, shown by Arrows AA, passes through, or has already passed through, the gas-permeable layer 2 into the space 5' and also flows on to further ducts, etc. Whilst it is not desired to be bound by theory, it is believed that condensation is substantially or totally prevented from forming on the outside of the duct 6 because of this arrangement. In particular, it is believed that, the temperature of the air AA in the space 5' is subjected to a heating affect, which is caused by the temperature of air surrounding the duct, shown by Letter B, being of a higher temperature than the air AA, and the air B heating the outer surface of the gas-impervious layer 3, which causes localised heating of air AA in the space 5' which is around the surface of the gas-impervious layer 3, or in contact therewith. Therefore, a temperature buffer layer is formed in the space 5', such that the temperature of the air AA is between the temperature of the treated air A and that of the air B surrounding the duct 6. Accordingly, the dew-point of air B around the surface of the duct 6, or in contact therewith, is not reached and condensation does not form on the outer surface of the duct 6.

Potentially, any supports or spacing means can be used, provided that the flow of gas through the spaces 5,5' are substantially unhindered. For example, meshes, tabs, semi-rigid foam or a fibrous filler material may be used between the gas-permeable and gas-impervious layers 2,3.

The duct 6 can be of any shape, but circular, square or D-shaped cross-sections are most preferred, as these shapes correspond to prior art ducts.

The aramid material which makes Nomex™ and the polyester which makes Travera™ are naturally fire-resistant. When alternative materials are used for the gas-permeable and/or gas-impervious layers, these materials may require the addition of a fire-retardant coating or additive.

Advantageously, the ducts of the present invention may be folded for storage and/or transport to the site of assembly.

In an alternative embodiment, the laminate and, therefore the duct, may be provided with a second or subsequent gas-permeable layer, provided that the outermost layer of the duct is the gas-impervious layer. By providing a further gas-permeable layer, the duct is provided with two temperature buffer layers, so that a greater temperature differential between the treated air and air surrounding the duct can be accommodated.

Figure 7 shows an air circulation system 100 in which an air treatment unit 101, situated in compartment e, provides treated air to a number of other compartments a,b,c,d, spaced apart from compartment e. Each of compartments a,b,c are provided with one or more prior art textile ducts 102 (dispensation devices), for example, a duct such as one known under the trade mark Texvent. Compartment d is provided with an air handling unit 103. Ducts 6 of the present invention run from the air treatment unit 101 to compartments a,b,d and also from compartment d to compartment c.

In use of the air circulation system 100, treated air from the air treatment unit 101 passes along ducts 6, of the present invention, to compartments a,b,c,d. During its passage, substantially no treated air is lost from the ducts 6 and substantially no condensation forms on the outside of the ducts 6. In compartments a,b,c the treated air passes into prior art textile ducts 102, from where the treated air can pass through the ducts 102 and provide treated air to the compartments.

Textile ducts and ducting of the present invention, and the claimed air circulation system, are believed to be particularly useful in air treatment and/or distribution systems for the marine defence field. In addition, it is conceivable that the claimed textile ducts may be used in both the commercial/building field and car/vehicle manufacture, as the technology of the ducts will be equally of use in those fields.

## Claims

1. A textile duct (6) suitable for use in an air circulation system to transport a fluid whilst preventing condensation forming thereon, the duct (6) comprising an inner gas-permeable layer (2) and an outer gas-impervious layer (3) formed from a material comprising a textile material, and spacing means (4) located between the inner and outer layers (2;3) so as to provide one or more spaces (5;5') between the gas-permeable and gas-impervious layers (2;3) which spaces (5;5') is/are capable of transporting a fluid in use, **characterised in that** the inner gas-permeable layer (2) is provided with a porous weave which allows a fluid to pass through the inner gas-permeable layer (2).

2. A duct as claimed in claim 1, further comprising a plurality of apertures (7) in the inner gas-permeable layer (2) to make the inner layer more permeable.

3. A duct as claimed in claim 1, wherein the spacing means (4) is/are selected from one or more of strips, tabs, meshes, webs, fibrous material and/or foams.

4. A duct as claimed in claim 3, wherein the spacing means (4) is/are provided in sealing contact with one or more respective surfaces of the inner layer and/or the outer layer (2;3).

5. A duct as claimed in any one of the preceding claims, wherein the inner layer and/or the outer layer (2;3) is/are formed from a woven material.

6. A duct as claimed in any one of the preceding claims, wherein the outer layer (3) is formed from a material comprising an aramid and/or a polyester.

7. A duct as claimed in claim 6, wherein the material has a substantially non-porous weave.

8. A duct as claimed in claim 6 or claim 7, wherein the aramid is Nomex^{™}.

9. A duct as claimed in any one of the preceding claims, wherein the inner layer (2) is formed from a material comprising an aramid and/or a polyester.

10. A duct as claimed in claim 9, wherein the material has a porous weave.

11. A duct as claimed in claim 9 or claim 10, wherein the aramid is Nomex^{™}.

12. A duct as claimed in any one of the preceding claims, and further comprising a fire-retardant.

13. A duct as claimed in claim 12, wherein the fire retardant is associated with the material forming the inner layer (2) and/or the outer layer (3), and/or the one or more spacing means (4) between the inner layer and outer layers.

14. A duct as claimed in any one of the preceding claims, wherein the duct (6) has a substantially circular, D-shaped or quadrant cross-section.

15. A duct as claimed in any one of the preceding claims, and further comprising fastening means, preferably one or more zips.

16. A duct as claimed in any one of the preceding claims further comprising one or more additional gas-permeable layers interposed between the inner and outer layers.

17. A duct as claimed in any preceding claim wherein the inner gas-permeable layer and the outer gas-impervious layer (2;3) are formed from one or more materials comprising a fire-resistant material or a fire-retardant material.

18. A duct as claimed in claim 17, wherein the spacing means (4) is/are formed from one or more materials comprising a fire-resistant material or a fire-retardant material.

19. An air circulation system (100) comprising one or more textile ducts as defined in any one of claims 1 to 18.

20. An air circulation system as claimed in claim 19 comprising one or more air treatment units (101) and/or air handling units (103), wherein said one or more ducts (6) provide(s) passages by which treated air can pass from the treatment and/or handling unit(s) (101;103) to a point of dispensation.

21. An air circulation system as claimed in claim 19 or claim 20 further comprising one or more air dispensation devices (102), wherein said one or more ducts (6) provide(s) treated air to said one or more dispensation devices (102).

22. An air circulation system as claimed in any one of claims 19 to 21, wherein, in use, the air circulation system (100) is configured to provide the treated air at a temperature below the temperature of air surrounding said one or more ducts (6).

23. An air circulation system as claimed in any one of claims 20 to 22, wherein, in use, the air is treated by the air treatment and/or handling units to remove dust, particulates, moisture, and/or nuclear and/or biological and/or chemical agents.

24. An air circulation system as claimed in any one of claims 19 to 23, wherein the air circulation system (100) is provided on a marine vessel, such as, a submarine or a ship.

25. An air circulation system as claimed in any one of claims 19 to 23, wherein the air circulation system is provided in a building.

26. An air circulation system as claimed in any one of claims 19 to 23, wherein the air circulation system is provided in a vehicle, such as, a car.

## Patentansprüche

1. Textile Leitung (6), die für die Verwendung in einem Luftzirkulationssystem zum Transport eines Fluids bei gleichzeitigem Verhindern, dass sich darauf ein Kondensat bildet, geeignet ist, wobei die Leitung (6) eine innere gas-durchlässige Schicht (2) und eine äußere gas-undurchlässige Schicht (3) aufweist, die aus einem Material, das ein Textilmaterial aufweist, gebildet sind, sowie Abstandsmittel (4), die zwischen der inneren und äußeren Schicht (2;3) positioniert sind, so dass ein oder mehrere Zwischenräume (5; 5') zwischen der gas-durchlässigen und der gas-undurchlässigen Schicht (2;3) bereitgestellt sind, welcher Zwischenraum/welche Zwischenräume (5;5') dazu fähig ist/sind, ein Fluid in Verwendung zu transportieren, **dadurch gekennzeichnet, dass** die innere gas-durchlässige Schicht (2) mit einem porösen Gewebe versehen ist, welches es einem Fluid ermöglicht, die innere gas-durchlässige Schicht (2) zu durchdringen.

2. Leitung nach Anspruch 1, die des Weiteren eine Vielzahl von Öffnungen (7) in der inneren gas-durchlässigen Schicht (2) aufweist, um die innere Schicht durchlässiger zu machen.

3. Leitung nach Anspruch 1, wobei das/die Abstandsmittel (4) aus einem oder mehreren von Streifen, Laschen, Maschen, Netzen, fasrigen Materialien und/oder Schaumstoffen ausgewählt wird/werden.

4. Leitung nach Anspruch 3, wobei das/die Abstandsmittel (4) in Abdichtkontakt mit einer oder mehreren entsprechenden Oberflächen der inneren Schicht und/oder der äußeren Schicht (2;3) vorgesehen ist/sind.

5. Leitung nach einem der vorhergehenden Ansprüche, wobei die innere Schicht und/oder die äußere Schicht (2;3) aus einem Webmaterial gebildet ist/sind.

6. Leitung nach einem der vorhergehenden Ansprüche, wobei die äußere Schicht (3) aus einem Material gebildet ist, das ein Aramid und/oder ein Polyester aufweist.

7. Leitung nach Anspruch 6, wobei das Material ein im Wesentliches porenfreies Gewebe aufweist.

8. Leitung nach Anspruch 6 oder Anspruch 7, wobei das Aramid Nomex^{™} ist.

9. Leitung nach einem der vorhergehenden Ansprüche, wobei die innere Schicht (2) aus einem Material gebildet ist, das ein Aramid und/oder ein Polyester aufweist.

10. Leitung nach Anspruch 9, wobei das Material ein poröses Gewebe aufweist.

11. Leitung nach Anspruch 9 oder Anspruch 10, wobei das Aramid Nomex^{™} ist.

12. Leitung nach einem der vorhergehenden Ansprüche, die des Weiteren ein feuerhemmendes Mittel aufweist.

13. Leitung nach Anspruch 12, wobei das feuerhemmende Mittel dem Material zugehörig ist, das die innere Schicht (2) und/oder die äußere Schicht (3) und/oder das eine oder die mehreren Abstandsmittel (4) zwischen der inneren Schicht und der äußeren Schicht bildet.

14. Leitung nach einem der vorhergehenden Ansprüche, wobei die Leitung (6) einen im Wesentlichen kreisrunden, D-förmigen oder viertelkreisförmigen Querschnitt aufweist.

15. Leitung nach einem der vorhergehenden Ansprüche, die des Weiteren Befestigungsmittel aufweist, bevorzugt einen oder mehrere Reißverschlüsse.

16. Leitung nach einem der vorhergehenden Ansprüche, die des Weiteren eine oder mehrere zusätzliche gas-durchlässige Schichten aufweist, die zwischen der inneren und der äußeren Schicht eingefügt ist/sind.

17. Leitung nach einem der vorhergehenden Ansprüche, wobei die innere gas-durchlässige Schicht und die äußere gas-undurchlässige Schicht (2;3) aus einem oder mehreren Materialien gebildet sind, die ein feuerfestes Material oder ein feuerhemmendes Material aufweisen.

18. Leitung nach Anspruch 17, wobei das/die Abstandsmittel aus einem oder mehreren Materialien gebildet ist/sind, die ein feuerfestes Material oder ein feuerhemmendes Material aufweisen.

19. Luftzirkulationssystem (100), das eine oder mehrere textile Leitungen gemäß einem der Ansprüche 1 bis 18 aufweist.

20. Luftzirkulationssystem nach Anspruch 19, das eine oder mehrere Luftaufbereitungseinheiten (101) und/oder Lüftungseinheiten (103) aufweist, wobei die besagte eine oder die besagten mehreren Leitungen (6) Durchgänge bereitstellt/bereitstellen, durch welche aufbereitete Luft von den Luftaufbereitungs- und/oder Lüftungseinheiten (101;103) zu einem Verteilerpunkt strömen kann.

21. Luftzirkulationssystem nach Anspruch 19 oder Anspruch 20, das des Weiteren eine oder mehrere Luftverteilervorrichtungen (102) aufweist, wobei die besagte eine oder die besagten mehreren Leitungen (6) die besagte eine oder die besagten mehreren Verteilervorrichtungen (102) mit aufbereiteter Luft versieht/versehen.

22. Luftzirkulationssystem nach einem der Ansprüche 19 bis 21, wobei, in der Verwendung, das Luftzirkulationssystem (100) so ausgestaltet ist, dass es die aufbereitete Luft bei einer Temperatur bereitstellt, die niedriger ist als die Temperatur von Luft, die die besagte eine oder die besagten mehreren Leitungen (6) umgibt.

23. Luftzirkulationssystem nach einem der Ansprüche 20 bis 22, wobei, in der Verwendung, die Luft von den Luftaufbereitungs- und/oder Lüftungseinheiten so aufbereitet wird, dass Staub, Feinstaub, Feuchtigkeit und/oder atomare und/oder biologische und/oder chemische Stoffe entfernt werden.

24. Luftzirkulationssystem nach einem der Ansprüche 19 bis 23, wobei das Luftzirkulationssystem (100) auf einem Wasserfahrzeug, wie z.B. einem U-Boot oder einem Schiff, bereitgestellt ist.

25. Luftzirkulationssystem nach einem der Ansprüche 19 bis 23, wobei das Luftzirkulationssystem in einem Gebäude bereitgestellt ist.

26. Luftzirkulationssystem nach einem der Ansprüche 19 bis 23, wobei das Luftzirkulationssystem in einem Fahrzeug, wie z.B. einem Auto, bereitgestellt ist.

## Revendications

1. Conduit textile (6) apte à être utilisé dans un système de circulation d'air pour transporter un fluide tout en empêchant la formation d'une condensation sur celui-ci, le conduit (6) comprenant une couche intérieure perméable aux gaz (2) et une couche extérieure imperméable aux gaz (3) réalisée en un matériau comprenant un matériau textile, et des moyens d'écartement (4) situés entre les couches intérieure et extérieure (2 ; 3) pour réaliser un ou plusieurs espaces (5 ; 5') entre les couches perméable aux gaz et imperméable aux gaz (2 ; 3), lesdits espaces (5 ; 5') est/sont aptes à transporter un fluide en cours d'utilisation, **caractérisé en ce que** la couche intérieure (2) perméable aux gaz présente un tissage poreux qui permet le passage d'un fluide à travers la couche intérieure perméable aux gaz (2).

2. Conduit selon la revendication 1, comprenant en outre une pluralité d'ouvertures (7) dans la couche intérieure perméable aux gaz (2) pour rendre la couche intérieure plus perméable.

3. Conduit selon la revendication 1, dans lequel le(s) moyen d'écartement (4) est/sont sélectionnés parmi un ou plusieurs de bandes, pattes, mailles, maillages, matériaux fibreux et/ou mousses.

4. Conduit selon la revendication 3, dans lequel le(s) moyens d'écartement (4) est/sont réalisés en contact étanche avec une ou plusieurs surfaces respectives de la couche intérieure et/ou de la couche extérieure (2 ; 3).

5. Conduit selon l'une quelconque des revendications précédentes, dans lequel la couche intérieure et/ou la couche extérieure (2 ; 3) est/sont réalisées en un matériau tissé.

6. Conduit selon l'une quelconque des revendications précédentes, dans lequel la couche extérieure (3) est réalisée en un matériau comprenant un aramide et/ou un polyester.

7. Conduit selon la revendication 6, dans lequel le matériau possède un tissage sensiblement non poreux.

8. Conduit selon la revendication 6 ou la revendication 7, dans lequel l'aramide est le Nomex^{™}.

9. Conduit selon l'une quelconque des revendications précédentes, dans lequel la couche intérieure (2) est réalisée en un matériau comprenant un aramide et/ou un polyester.

10. Conduit selon la revendication 9, dans lequel le matériau possède un tissage poreux.

11. Conduit selon la revendication 9 ou la revendication 10, dans lequel l'aramide est le Nomex^{™}.

12. Conduit selon l'une quelconque des revendications précédentes, et comprenant en outre un matériau ignifuge.

13. Conduit selon la revendication 12, dans lequel le matériau ignifuge est associé au matériau formant la couche intérieure (2) et/ou la couche extérieure (3), et/ou un ou plusieurs moyens d'écartement précités (4) entre la couche intérieure et les couches extérieures.

14. Conduit selon l'une quelconque des revendications précédentes, dans lequel le conduit (6) a une section transversale sensiblement circulaire, en forme de D ou en quadrant.

15. Conduit selon l'une quelconque des revendications précédentes, et comprenant en outre des moyens de fixations, de préférence un ou plusieurs fermetures à glissière.

16. Conduit selon l'une quelconque des revendications précédentes, comprenant en outre une ou plusieurs couches additionnelles perméables aux gaz interposées entre les couches intérieure et extérieure.

17. Conduit selon l'une quelconque des revendications précédentes, dans lequel la couche intérieure perméable aux gaz et la couche extérieure imperméable aux gaz (2 ; 3) sont formées à partir d'un ou de plusieurs matériaux comprenant un matériau résistant aux flammes ou un matériau ignifuge.

18. Conduit selon la revendication 17, dans lequel le(s) moyen(s) d'écartement (4) est/sont formés à partir d'un ou de plusieurs matériaux comprenant un matériau résistant aux flammes ou un matériau ignifuge.

19. Système de circulation d'air (100) comprenant un ou plusieurs conduits textiles tels que définis dans l'une quelconque des revendications 1 à 18.

20. Système de circulation d'air selon la revendication 19, comprenant une ou plusieurs unités de traitement d'air (101) et/ou unités de manipulation d'air (103), où lesdits un ou plusieurs conduits (6) réalisent des passages par lesquels l'air traité peut passer de la ou des unités de traitement et/ou de manipulation (101, 103) à un point de distribution.

21. Système de circulation d'air selon la revendication 19 ou la revendication 20, comprenant en outre un ou plusieurs dispositifs de distribution d'air (102), où lesdits un ou plusieurs conduits (6) fournissent de l'air traité à un ou plusieurs dispositifs de distribution précités (102).

22. Système de circulation d'air selon l'une quelconque des revendications 19 à 21, dans lequel, en cours d'utilisation, le système de circulation d'air (100) est configuré pour fournir l'air traité à une température inférieure à la température de l'air entourant un ou plusieurs conduits précités (6).

23. Système de circulation d'air selon l'une quelconque des revendications 20 à 22, dans lequel, en cours d'utilisation, l'air est traité par les unités de traitement et/ou de manipulation d'air pour supprimer la poussière, les particules, l'humidité et/ou des agents nucléaires et/ou biologiques et/ou chimiques.

24. Système de circulation d'air selon l'une quelconque des revendications 19 à 23, dans lequel le système de circulation d'air (100) est réalisé sur un vaisseau marin, comme un sous-marin ou un navire.

25. Système de circulation d'air selon l'une quelconque des revendications 19 à 23, dans lequel le système de circulation d'air est réalisé dans un bâtiment.

26. Système de circulation d'air selon l'une quelconque des revendications 19 à 23, dans lequel le système de circulation d'air est réalisé dans un véhicule, comme une voiture.
